# EUROPEAN PATENT APPLICATION

(11) **EP 2 463 633 A1**
(43) Date of publication of application: **13.06.2012**
(21) Application number: 10194181.3
(22) Date of filing: 08.12.2010
(51) Int. Cl.: G01J 3/10, G01J 3/36, G01J 3/427, G01N 21/33

(54) **Quantifying nucleic acid in samples**

(71) Applicant: QIAGEN Lake Constance GmbH, 78333 Stockach (DE)
(72) Inventor: Quintel, Harald, 8266 Steckborn (CH); Feuerbacher, Elmar Christian, 78462 Konstanz (DE); Gruler, Roman, 78628 Rottweil (DE); Huckins, Stuart Ronald, 78333 Stockach (DE); Zahr, Dominik, 41516 Grevenbroich (DE); Rebholz, Markus, 78333 Stockach (DE); Schild, Robert, 8610 Uster (CH)
(74) Representative: Vossius & Partner

(57) **Abstract**

A photometric device (18) for quantifying a nucleic acid in a sample (518) in a tube (58), comprises a light emission unit (28), a sample obtaining unit (38) for holding the tube (58) with the nucleic acid sample (518) and a detection unit (48) wherein the sample obtaining unit (38) is arranged in between the light emission unit (28) and the detection unit (48) In particular, the light emission unit (28) and the detection unit (48) are arranged to provide light through the sample obtaining unit (38) such that light of a first wavelength of about 230 nanometers and light of a second wavelength of about 260 nanomaters are simultaneously detectable within the detection unit (48). The photometric device (18) allows for efficiently analysing the nucleic acid sample by only considering invisible light. In particular, content of nucleic acid such as particularly a RNA or a DNA and a nucleic acid/salt ratio can simultaneously be determined such that efficiency of quantification of the nucleic acid sample (518) can be increased. Furthermore, since in addition thereto the sample obtaining unit (38) is arranged to hold the tube (58) or cuvette and the light directly passes the sample (518) being arranged in the tube (58) or cuvette, loss of sample, contamination of sample, need of additional sample treatment equipment such as pipettes or additional tubes as well as frequent cleaning of optics of the photometric device can be prevented or reduced.

## Description

### Technical Field

The present invention relates to a photometric device according to the preamble of independent claim 1 and a method according to the preamble of independent claim 15. Such devices and methods can be used for quantifying a nucleic acid in a sample being arranged in a tube or cuvette.

### Background Art

For evaluating composition of a sample such as particularly of a liquid sample, light transmission photometry or absorption spectroscopy is commonly applied. In this context, light relates to electromagnetic radiation of any wavelength including visible light of a wavelength within a range of about 380 nanometers to about 780 nanometers. Thereby, suitable photometric devices having a light source, a sample holder and a detector are often used. Within such photometric devices, a sample is arranged in the sample holder and a light beam is provided by the light source through the sample to the detector. Comparing data of the light emitted by the light source with the light detected by the detector allows for determining the absorption of the light by the sample. Since different substances usually differ in their absorption properties with regard to the absorption ability in specific wavelengths ranges, analysing the light absorption of the sample allows for determining the composition of the sample.

For example, in US 5,825,478 A a photometer for measuring electromagnetic radiation absorption of a sample utilizing a electromagnetic radiation source is shown. The photometer particularly comprises a plurality of beam splitters and a plurality of detectors wherein the beam splitters redirect the light to the detectors after having passed the sample. Thereby, each of the detectors can be arranged to detect wavelengths within a specific predefined wavelength range of visible light. Within this photometer the visible light is at least partially conducted in fibre optic fibres which can reduce the efficiency of the photometer and enhance its structural complexity.

For quantifying a nucleic acid such as a deoxyribonucleic acid (DNA) in a sample it is often desirable to determine a content of DNA in the sample, a DNA/salt ratio of the sample and a DNA/proteins ratio in the sample. When applying transmission photometry for this purpose, absorption of ultra violet light of three different wavelengths by the sample has to be analyzed. In particular, for determining the content of DNA in the sample, the density in the sample has to be measured for light of about 260 nanometers. For determining the DNA/salt ratio in the sample the density in the sample has to be measured for light of about 230 nanometers. And for determining the DNA/proteins ratio in the sample the density in the sample has to be measured for light of about 280 nanometers.

For performing such determination in order to quantify a nucleic acid in a sample, various procedures are commonly applied. For example, in one embodiment a droplet of the sample is provided between two lenses and held there by means of wetting. The density in the droplet is then measured for light of the three wavelengths one after another. Such a determination can be comparably inefficient, can bear the risk of contamination as well as of sample loss, can involve an additional instrument such as a pipette and can make it necessary to clean the lenses after each measurement. In another similar example, the sample is provided in a special pipette system. Such a determination can also be comparably inefficient, can bear the risk of contamination as well as of sample loss and involves a special instrument, i.e. the pipette system, In a further other similar example, the sample is provided in a microfluidic chip. However, such a determination can also involve drawbacks with regard to efficiency, risk of sample loss and high costs of the microfluidic chips.

Therefore, there is a need for a photometric device allowing an efficient quantification of a nucleic acid in a sample.

### Disclosure of the Invention

According to the invention this need is settled by a photometric device as it is defined by the features of independent claim 1 and by a method as it is defined by the features of independent claim 15. Preferred embodiments are subject of the dependent claims.

The gist of the invention is the following: A photometric device for quantifying a nucleic acid in a sample in a sample container comprises a light emission unit, a sample obtaining unit for holding the sample container with the nucleic acid sample and a detection unit. The sample obtaining unit is arranged between the light emission unit and the detection unit. Further, the light emission unit and the detection unit are arranged to provide light from the light emission unit through the sample obtaining unit to the detection unit such that light of a first wavelength of about 230 nanometers (nm) or of about 280 nm and light of a second wavelength of about 260 nm is simultaneously detectable by the detection unit.

In this context, the nucleic acid sample can particularly be a deoxyribonucleic acid (DNA) sample or a ribonucleic acid (RNA) sample. Sample container in this context relates to any container being suitable to receive and present the sample. In particular, a sample container can be a tube, a cuvette, a microplate, a microfluidic device or the like. Arranged in between the light emission unit and the detection unit in this context relates to the optical path of light emitted by the light emission unit such that the light emitted by the light emission unit passes the sample obtaining unit before arriving at the detection unit. With regard to the wavelengths, the term "about" relates to ranges around the exactly mentioned values of ± five nm, ± four nm, ± three nm, ± two nm or ± one nm. The light emission unit in this context can comprise a continuously lighting lamp or a flashing lamp or a pulsed lamp, such as, e.g., a deuterium lamp, a light emitting diode, a xenon flash lamp or the like. The photometric device can further comprise an evaluation unit for analysing optical density data regarding the light of the first wavelength provided by the detection unit and the light of the second wavelength provided by the detection unit. In particular, the evaluation unit can be implemented as a computer executing suitable software or computer program. Further, an analogue/digital (AD) converter can be arranged in between the detection unit and the evaluation unit for converting analogue data or signals detected by the detection unit into digital data evaluatable by the evaluation unit.

The photometric device according to the invention allows for efficiently analysing the nucleic acid sample by only considering invisible light. In particular, content of nucleic acid such as particularly RNA or DNA and either a nucleic acid/salt ratio or a nucleic acid/protein ratio can simultaneously be determined such that efficiency of quantification of the nucleic acid sample can be increased. Furthermore, since in addition thereto the sample obtaining unit is arranged to hold the sample container and the light directly passes the sample being arranged in the sample container, loss of sample, contamination of sample, need of additional sample treatment equipment such as pipettes or additional sample containers as well as frequent cleaning of optics of the photometric device can be prevented or reduced.

Preferably, the light emission unit and the detection unit are arranged to provide light from the light emission unit through the sample obtaining unit to the detection unit such that light of a third wavelength of about 230 nm or of about 280 nm is detectable by the detection unit simultaneously with the light of the first wavelength and the light of the second wavelength wherein the first wavelength differs from the third wavelength. Like this, evaluation of the content of the nucleic acid such as RNA or DNA, of the RNA/salt ratio or DNA/salt ratio and of the RNA/protein ratio or DNA/protein ratio can be performed simultaneously in one single step. Thus, with such a photometric device a simultaneous and therefore efficient evaluation of these properties of the sample is possible.

Preferably, the photometric device comprises a filter unit being arranged between the emission unit and the sample obtaining unit. Particularly, the filter unit can comprise a visible and near infrared (VIS-NIR) light filter. By means of such a filter unit, irrelevant range of light such as visible light can be eliminated at an early stage, i.e. before passing the sample obtaining unit. Thus, stress of the sample can be reduced and quality of quantitative sample analysis can be increased.

Preferably, the photometric device comprises a monitor light detector being arranged at the light emission unit. In this context, being arranged at the light emission unit relates to an arrangement close to the light emission unit in order to detect the light emitted by the light emission unit as unaltered as possible. In particular, the monitor light detector can be arranged in the direction of the light (beam) in front of the sample holding unit and in front of the filter unit such as at a light exit of the light emission unit. Such a monitor light detector allows for analyzing the light emitted by the light emission unit and for considering variations of the emitted light when quantifying the nucleic acid in the sample. For example, the light emitted by the light emission unit can vary due to increasing age of the lamp or the like. In particular, if an evaluation unit is used within the photometric device, variations of the light emitted by the light emission unit can be algorithmically balanced. Thus, a long term precise quantification of the nucleic acid in the sample is possible and the influence of variations of the light emission unit, e.g. due to aging of a lamp, can be minimized.

In one preferred embodiment, the light emission unit comprises a first light source being arranged to emit light of the first wavelength, a second light source being arranged to emit light of the second wavelength and a third light source being arranged to emit light of the third wavelength. Like this, it is possible to provide a comparably simple detector within the photometric device being only provided with light of the relevant wavelengths. Thereby, the first light source of the light emission unit, the second light source of the light emission unit and the third light source of the light emission unit preferably are light-emitting diodes. Generally, light emitting diodes can conveniently be arranged to emit light within a comparably small predefined range of wavelength. Thus, choosing appropriate LEDs as first light source, second light source and third light source allows to conveniently implement the suited light emission unit. Furthermore, since LEDs only emit light within a comparably small range of wavelength filtering can be reduced or even completely omitted. This can allow to reduce complexity of the photometric device and/or to reduce energy consumption of the photometric device.

In another preferred embodiment, the detection unit comprises a first detector being arranged to detect light of the first wavelength, a second detector being arranged to detect light of the second wavelength and a third detector being arranged to detect light of the third wavelength. The first detector, the second detector and the third detector can particularly be arranged as photodiodes, such as ultraviolet (UV) photodiodes being blind for visible light. Such a detection unit allows for an efficient determination of light having the relevant wavelengths. Thereby, the detection unit preferably comprises a first filter unit associated to the first detector, a second filter unit associated to the second detector and a third filter unit associated to the third detector. The first filter, the second filter and the third filter can particularly be band pass filters. Like this, the detectors can be provided with light of in a comparably narrow range of wavelengths, e.g., a range of ± five nm, of ± four nm, of ± three nm, of ± two nm or of ± one nm around the respective first wavelength, second wavelength or third wavelength. In particular, the first filter unit preferably is arranged to filter light of the first wavelength, the second filter unit preferably is arranged to filter light of the second wavelength and the third filter unit preferably is arranged to filter light of the third wavelength.

Preferably, within the other preferred embodiment the detection unit comprises a first dichroic structure associated to the first detector and a second dichroic structure associated to the second detector. The first and the second dichroic structures can be light splitters allowing to redirect light within a specific range of wavelengths and to be transparent for other light. In particular, they can be beam splitters, dichroic mirrors, dichroites or the like. Thereby, the first filter unit preferably is arranged between the first dichroic structure and the first detector, the second filter unit is arranged between the second dichroic structure and the second detector and the third filter unit is arranged between the second dichroic structure and the third detector. Such an arrangement can allow for an efficient and precise determination of the density of the sample within the relevant wavelengths.

Further, the first dichroic structure preferably is arranged to redirect light below or above a first wavelength cutoff or threshold toward the first detector and the second dichroic structure is arranged to redirect light below or above a second wavelength cutoff or threshold towards the second detector. In this context below one of the wavelength cutoff relates to light having smaller wavelengths than the cutoff wherein light of the cutoff itself can be included or excluded. Correspondingly, above one of the wavelength cutoff relates in this context to light having bigger wavelengths than the cutoff wherein light of the cutoff itself can be included or excluded. By arranging the first and second diachronic structures either to redirect light below the cutoffs or above the cutoffs, they can form a low pass system or a high pass system, respectively. Thereby, the first dichroic structure and the second dichroic structure preferably are transparent for light not being redirected and the first wavelength cutoff preferably is about 245 nanometers and the second wavelength cutoff about 270 nanometers. Still further, the first dichroic structure preferably is located closer to the light emission unit than the second dichroic structure.

Another aspect of the invention relates to a method for photometrically quantifying a nucleic acid in a sample. The method comprises arranging a sample container comprising the sample in a sample obtaining unit, arranging a light emission unit to provide light through the sample container being arranged in the sample obtaining unit and arranging a detection unit to detect the light having passed the sample container. Thereby, the light of a first wavelength of about 230 nm or of about 280 nm and light of a second wavelength of about 260 nm are simultaneously detected by the detection unit. The method according to the invention can provide the same advantageous effects as the effects of the photometric device described above. Further, the method can comprise further features corresponding to the features of the preferred embodiment of the photometric device described above. Thereby, also advantageous effects corresponding to the advantageous effects of the preferred embodiments of the photometric device can be provided by the method.

These and other aspects of the invention will be apparent from and elucidated with reference to the embodiment(s) described hereinafter.

### Brief Description of the Drawings

The photometric device method according to the invention and the method according to the invention are described in more detail hereinbelow by way of exemplary embodiments and with reference to the attached drawings, in which:
- Fig. 1: shows a schematic view of a first embodiment of the photometric device according to the invention;
- Fig. 2: shows a schematic view of a second embodiment of the photometric device according to the invention; and
- Fig. 3: shows a schematic view of a third embodiment of the photometric device according to the invention.

### Mode(s) for Carrying Out the Invention

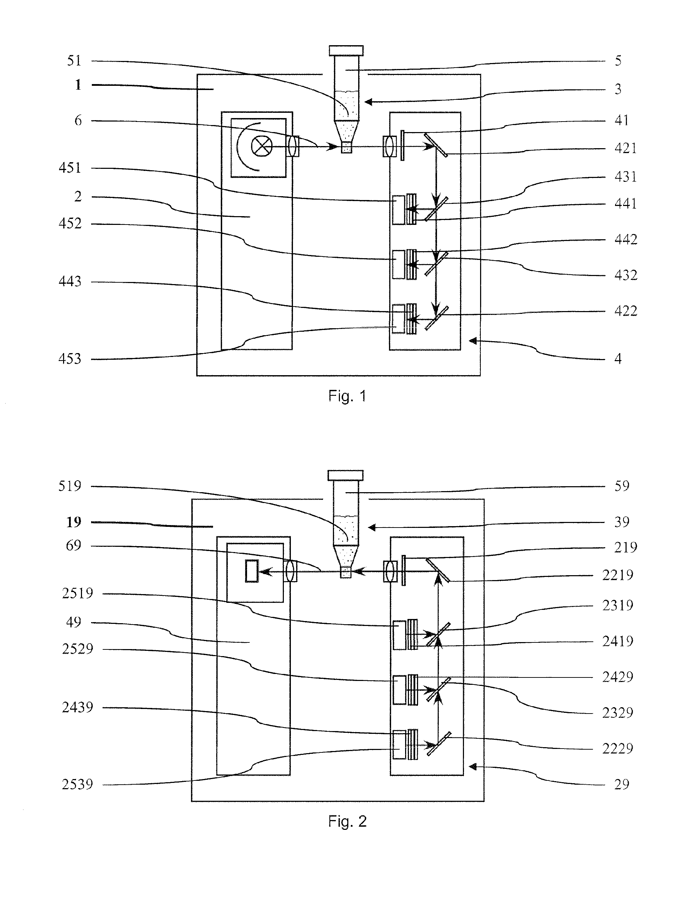

Fig. 1 shows a first embodiment of a photometric device 1 according to the invention. The photometric device 1 comprises a lamp 2 as light emission unit, a sample holder 3 as sample obtaining unit and a detection unit 4. The sample holder 3 is arranged to accommodate a transparent tube 5 or cuvette as sample container containing a liquid sample 51 such as a biological sample. The sample holder 3 is further arranged to precisely locate the tube 5 in order that it lies within a light beam 6 emitted by the lamp 2.

The detection unit 4 comprises a blind 41, a first mirror 421, a first beam splitter 431 as first dichroic structure, a second beam splitter 432 as second dichroic structure and a second mirror 422. After passing the tube 5 with the sample 51, the light beam 6 enters the detection unit 4 via the blind 41 and is redirected by the first mirror 41 by about 90 degrees into the direction of the first beam splitter 431. At the first beam splitter 431 light of the beam 6 having a wavelength below a first wavelength cutoff is redirected by about 90 degrees into the direction of a first detector 451. The other light of the light beam 6 passes the first beam splitter 431 into the direction of the second light splitter 432. At the second light splitter 432, the light having a wavelength below a second wavelength cutoff is redirected by about 90 degrees into the direction of a second detector 452. The light having a wavelength above the second wavelength cutoff passes the second light splitter 432 into the direction of the second mirror 422 at which the light is redirected by about 90 degrees into the direction of a third detector 453.

Between the first beam splitter 431 and the first detector 451 a first band filter 441 is arranged as first filter unit. The first band filter 441 filters the light having a wavelength below the first wavelength cutoff such that light within a comparably narrow range of wavelengths hits the first detector 451. Similarly, a second band filter 442 is arranged as second filter unit between the second beam splitter 432 and the second detector 452 as well as a third band filter 443 is arranged as third filter unit between the second mirror 422 and the third detector 453. The second band filter 442 filters the light having a wavelength between the first wavelength cutoff and the second wavelength cutoff such that light within a comparably narrow range of wavelengths hits the second detector 452. Correspondingly, the third band filter 443 filters the light having a wavelength above the second wavelength cutoff such that light within a comparably narrow range of wavelengths hits the third detector 453.

In particular, the first wavelength cutoff is about 245 nm and the second wavelength cutoff is about 270 nm. The first band filter 441 filters light of a wavelength of 230 nm, the second band filter 442 filters light of a wavelength of 260 nm and the third band filter 443 filters light of 280 nm. The first band filter 441, the second band filter 442 and the third band filter 443 have a narrow tolerance range such as, e.g. 0.5 nm, 1 nm or 2 nm. The first detector 451, the second detector 452 and the third detector 453 are ultraviolet (UV) photodiodes being particularly sensitive for light of the corresponding wavelength and being blind for visible light.

In Fig. 2 a second embodiment of a photometric device 19 according to the invention is shown. The photometric device 19 comprises a light source 29, a sample holder 39 as sample obtaining unit and a detector 49 as detection unit. Corresponding to the sample holder 3 of the first embodiment described above, the sample holder 39 is arranged to accommodate a transparent tube 59 or cuvette as sample container containing a liquid sample 519 such as a biological sample wherein the sample holder 39 is arranged to precisely locate the tube 59 in order that it lies within a light beam 69 emitted by the light source 29 and received by the detector 49.

The light source 29 comprises a blind 219, a first mirror 2219, a second mirror 2319, a third mirror 2329 and a fourth mirror 2229. Thereby the second mirror 2319 and the third mirror 2329 each have a front side and a back side wherein they are transparent for light hitting on the back side and reflective for light hitting on the front side. The light emission unit 29 further comprises a first light emitting diode (LED) 2519 as first light source, a second LED 2529 as second light source and a third LED 2539 as third light source. The first LED 2519 emits light of a wavelength of about 230 nm which passes a first band filter 2419 into the direction of the front side of the second mirror 2319. Similarly, the second LED 2529 emits light of a wavelength of about 260 nm which passes a second band filter 2429 into the direction of the front side of the third mirror 2329. Finally, the third LED 2539 emits light of a wavelength of about 280 nm which passes a third band filter 2439 into the direction of the fourth mirror 2229.

The complete light beam 69 consisting of the light emitted by the first LED 2519, the light emitted by the second LED 2529 and the light emitted by the third LED 2539 is redirected by the first mirror 2219 by about 90 degrees into the direction of the sample 519 in the tube 59 held by the sample holder 39. After passing the sample 519, the light beam 69 enters the detector 49. Thus, only light of the relevant wavelengths, i.e. 230 nm, 260 nm and 280 nm, arrives at the detector 49.

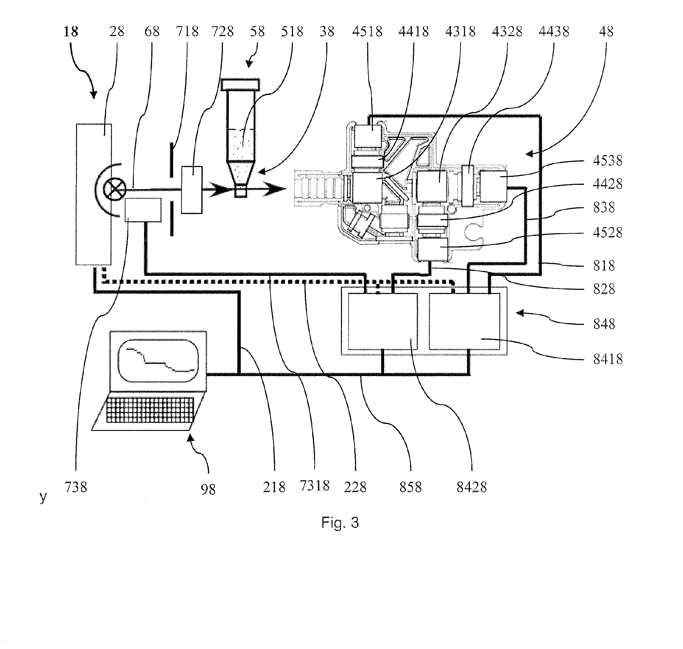

Fig. 3 shows a third embodiment of a photometric device 18 according to the invention. The photometric device 18 comprises a xenon flash lamp 28 as pulsed lamp as light emission unit, a sample holder 38 as sample obtaining unit and a detection unit 48. The sample holder 38 is arranged to accommodate a transparent tube 58 or cuvette as sample container containing a liquid sample 518 such as a biological sample. The sample holder 38 is further arranged to precisely locate the tube 58 in order that it lies within a light beam 68 emitted by the flash lamp 28. Between the flash lamp 28 and the sample holder 38, a source light detector 738 as monitor light detector, a blend 718 and a VIS-NIR filter 728 as filter unit is arranged to filter visible and near infrared light from the light beam 68 emitted by the flash lamp 28.

The detection unit 48 comprises a first beam splitter 4318 as first dichroic structure and a second beam splitter 4328 as second dichroic structure. After passing the tube 58 with the sample 518, the light beam 68 enters the detection unit 48 into the direction of the first beam splitter 4318. At the first beam splitter 4318 light of the beam 68 having a wavelength below a first wavelength cutoff is redirected by about 90 degrees into the direction of a first detector 4518. The other light of the light beam 68 passes the first beam splitter 4318 into the direction of the second light splitter 4328. At the second light splitter 4328, the light having a wavelength below a second wavelength cutoff is redirected by about 90 degrees into the direction of a second detector 4528. The light having a wavelength above the second wavelength cutoff passes the second light splitter 4328 into the direction of a third detector 4538.

Between the first beam splitter 4318 and the first detector 4518 a first band filter 4418 is arranged as first filter unit. The first band filter 4418 filters the light having a wavelength below the first wavelength cutoff such that light within a comparably narrow range of wavelengths hits the first detector 4518. Similarly, a second band filter 4428 is arranged as second filter unit between the second beam splitter 4328 and the second detector 4528 as well as a third band filter 4438 is arranged as third filter unit between the second beam splitter 4328 and the third detector 4538. The second band filter 4428 filters the light having a wavelength between the first wavelength cutoff and the second wavelength cutoff such that light within a comparably narrow range of wavelengths hits the second detector 4528. Correspondingly, the third band filter 4438 filters the light having a wavelength above the second wavelength cutoff such that light within a comparably narrow range of wavelengths hits the third detector 4538.

In particular, the first wavelength cutoff is about 245 nm and the second wavelength cutoff is about 270 nm. The first band filter 4418 filters light of a wavelength of 230 nm, the second band filter 4428 filters light of a wavelength of 260 nm and the third band filter 4438 filters light of 280 nm. The first band filter 4418, the second band filter 4428 and the third band filter 4438 have a narrow tolerance range such as, e.g., 0.5 nm, 1 nm or 2 nm. The first detector 4518, the second detector 4528 and the third detector 4538 are UV photodiodes being particularly sensitive for light of the corresponding wavelength and being blind for visible light.

The signal sensed by the first detector 4518 is transferred via a first connection 818 such as a signal cable to a first analogue-digital (AD) converter 8418 of a conversion unit 848. Similarly, the signal sensed by the second detector 45281 is transferred via a second connection 828 such as a signal cable to a second AD converter 8428 of the conversion unit 848. Further, the signal sensed by the third detector 4538 is transferred via a third connection 838 such as a signal cable also to the first AD converter 8418 of the conversion unit 848. Finally, the signal sensed by the source light detector 738 is transferred via a source light connection 7318 such as a signal cable also to the second AD converter 8428 of the conversion unit 848.

The first AD converter 8418 and the second AD converter 8428 are connected to a laptop computer 98 as evaluation unit via a first communication cable 858. Further, the flash lamp 28 is connected to the laptop computer 98 via a second communication cable 218. Finally, the first AD converter 8418 and the second AD converter 8428 are connected to the flash lamp 28 via a trigger cable 228.

The laptop computer 98 executes a software or computer application for analysing the light absorption of the sample 518 in order to determine the content of DNA, the DNA/salt ratio and the DNA/protein ratio of the sample 518. In particular, by means of the software the signals detected by the light source detector 738 are compared with the signals detected by the first detector 4518, the second detector 4528 and the third detector 4538 with respect to the light of the first, the second and the third wavelengths.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, alternatives of the embodiments described in the figures and the description and alternatives of features thereof can be disclaimed from the subject matter of the invention.

Furthermore, in the claims the word "comprising" does not exclude other elements or steps, and the indefinite article "a" or "an" does not exclude a plurality. A single unit may fulfill the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. Any reference signs in the claims should not be construed as limiting the scope.

## Claims

1. Photometric device (1; 18; 19) for quantifying a nucleic acid in a sample (51; 518; 519) in a sample container (5; 58; 59), comprising a light emission unit (2; 28; 29), a sample obtaining unit (3; 38; 39) for holding the sample container (5; 58; 59) with the sample (51; 518; 519) and a detection unit (4; 48; 49) wherein the sample obtaining unit (3; 38; 39) is arranged between the light emission unit (2; 28; 29) and the detection unit (4; 48; 49), **characterized in that** the light emission unit (2; 28; 29) and the detection unit (4; 48; 49) are arranged to provide light from the light emission unit (2; 28; 29) through the sample obtaining unit (3; 38; 39) to the detection unit (4; 48; 49) such that light of a first wavelength of about 230 nanometers or of about 280 nanometers and light of a second wavelength of about 260 nanomaters is simultaneously detectable by the detection unit (4; 48; 49).

2. Photometric device (1; 18; 19) according to claim 1, wherein the light emission unit (2; 28; 29) and the detection unit (4; 48; 49) are arranged to provide light from the light emission unit (2; 28; 29) through the sample obtaining unit (3; 38; 39) to the detection unit (4; 48; 49) such that light of a third wavelength of about 230 nanometers or of about 280 nanometers is detectable by the detection unit (4; 48; 49) simultaneously with the light of the first wavelength and the light of the second wavelength wherein the third wavelength differs from the first wavelength.

3. Photometric device (1; 18; 19) according to claim 1 or 2, comprising a filter unit (728) being arranged between the light emission unit (2; 28; 29) and the sample obtaining unit (3; 38; 39).

4. Photometric device (1; 18; 19) according to any one of claims 1 to 3, comprising a monitor light detector (738) being arranged at the light emission unit (2; 28; 29).

5. Photometric device (1; 18; 19) according to any one of claims 2 to 4, wherein the light emission unit (2; 28; 29) comprises a first light source (2519) being arranged to emit light of the first wavelength, a second light source (2529) being arranged to emit light of the second wavelength and a third light source (2539) being arranged to emit light of the third wavelength.

6. Photometric device (1; 18; 19) according to claim 5, wherein the first light source (2519) of the light emission unit (2; 28; 29), the second light source (2529) of the light emission unit (2; 28; 29) and the third light source (2539) of the light emission unit (2; 28; 29) are light-emitting diodes.

7. Photometric device (1; 18; 19) according to any one of claims 2 to 4, wherein the detection unit (4; 48; 49) comprises a first detector (451; 4518) being arranged to detect light of the first wavelength, a second detector (452; 4528) being arranged to detect light of the second wavelength and a third detector (453; 4538) being arranged to detect light of the third wavelength.

8. Photometric device (1; 18; 19) according to claim 7, wherein the detection unit (4; 48; 49) comprises a first filter unit (441; 4418) associated to the first detector (451; 4518), a second filter unit (442; 4428) associated to the second detector (452; 4528) and a third filter unit (443; 4438) associated to the third detector (453; 4538).

9. Photometric device (1; 18; 19) according to claim 8, wherein the first filter unit (441; 4418) is arranged to filter light of the first wavelength, the second filter unit (442; 4428) is arranged to filter light of the second wavelength and the third filter unit (443; 4438) is arranged to filter light of the third wavelength.

10. Photometric device (1; 18; 19) according to any one of claims 7 to 9, wherein the detection unit (4; 48; 49) comprises a first dichroic structure (431; 4318) associated to the first detector (451; 4518) and a second dichroic structure (432; 4328) associated to the second detector (452; 4528).

11. Photometric device (1; 18; 19) according to claim 9 and 10, wherein the first filter unit (441; 4418) is arranged between the first dichroic structure (431; 4318) and the first detector (451; 4518), the second filter unit (442; 4428) is arranged between the second dichroic structure (432; 4328) and the second detector (452; 4528) and the third filter unit (443; 4438) is arranged between the second dichroic structure (432; 4328) and the third detector (453; 4538).

12. Photometric device (1; 18; 19) according to claim 10 or 11, wherein the first dichroic structure (431; 4318) is arranged to redirect light below or above a first wavelength cutoff toward the first detector (451; 4518) and the second dichroic structure (432; 4328) is arranged to redirect light below or above a second wavelength cutoff towards the second detector (452; 4528) wherein the first wavelength cutoff preferably is about 245 nanometers and the second wavelength cutoff preferably is about 270 nanometers.

13. Photometric device (1; 18; 19) according to claim 12, wherein the first dichroic structure (431; 4318) and the second dichroic structure (432; 4328) are transparent for light not being redirected.

14. Photometric device (1; 18; 19) according to claim 12 or 13, wherein the first dichroic structure (431; 4318) is located closer to the light emission unit (2; 28; 29) than the second dichroic structure (432; 4328).

15. Method for photometrically quantifying a nucleic acid in a sample, comprising arranging a sample container (5; 58; 59) comprising the sample (51; 518; 519) in a sample obtaining unit (3; 38; 39),
arranging a light emission unit (2; 28; 29) to provide light through the sample container (5; 58; 59) being arranged in the sample obtaining unit (3; 38; 39) and arranging a detection unit (4; 48; 49) to detect the light having passed the sample container (5; 58; 59), **characterized in that**
light of a first wavelength of about 230 nanometers or of about 280 nanometers and light of a second wavelength of about 260 nanometers are simultaneously detected by the detection unit (4; 48; 49).
